# EUROPEAN PATENT APPLICATION

(11) **EP 1 744 281 A2**
(43) Date of publication of application: **17.01.2007**
(21) Application number: 06009232.7
(22) Date of filing: 04.05.2006
(51) Int. Cl.: G06T 7/20

(54) **Method of comparing motion and wireless terminal implementing the same**

(30) Priority: 15.07.2005 KR 20050064353
(71) Applicant: Samsung Electronics Co., Ltd., Suwon-si, Gyeonggi-Do (KR)
(72) Inventor: Kim, Jeong-Hoon, Yeongtong-gu Suwon-si Gyeonggi-do (KR)
(74) Representative: Lang, Johannes

(57) **Abstract**

Disclosed is a wireless terminal and method for comparing the motions of a video with the motions of a moving picture being displayed as a model. The method comprises the steps of switching to motion compare mode by selection during displaying the moving picture, extracting at least two image frames from video data input in the motion compare mode, extracting a shift frame from the image frames, extracting sampling data from the shift frame with reference to predetermined directions, converting the sampling data into orientation data, and comparing the orientation data with the orientation data of the moving picture to generate and display the results of the comparison.

## Description

### BACKGROUND OF THE INVENTION

### Field of the Invention

The present invention relates to a method and wireless terminal for comparing the motions of video camera data with the motions of a moving picture being displayed as a model.

### Description of the related art

Wireless mobile phones have been developed so as to have a structure that enables high-speed data transmission in addition to conventional voice communication. The data transmitted through the wireless terminal in data communication may include packet data and video data. A wireless terminal provided with a video data transceiver may transmit and receive video data and store received video data. In addition, it may be provided with a video camera for taking a moving or still picture and a display for presenting the moving or still picture taken by the camera. The camera is usually made of a CCD or CMOS sensor and has a display comprising an LCD. The video camera typically used tends to be miniaturized.

It would be desirable if a wireless terminal, having a video camera and means for reproducing a moving picture, were further able to compare the motion of a video camera subject with that of a moving picture being displayed as a model.

Accordingly, there is a need for an improved wireless device and method for comparing the motion of video data with that of a moving picture being displayed as a model.

### SUMMARY OF THE INVENTION

Exemplary embodiments of the present invention address at least the above problems and/or disadvantages and provide at least the advantages described below. Accordingly, an exemplary aspect of the present invention is to provide a wireless device and method for comparing the motion of input video data with that of a moving picture being displayed as a model.

According to an exemplary aspect of the present invention, a wireless device and method for comparing the motions of input video data with the motions of a moving picture being displayed as a model are provided where, at least two image frames are extracted from input video data a shift frame between the image frames is extracted, sampling data from the shift frame is extracted with reference to predetermined directions, the sampling data is converted to orientation data, and the orientation data is compared with the orientation data of a moving picture to generate a comparison result that may be displayed.

An exemplary embodiment of the present invention will now be described more specifically with reference to the attached drawings by way of example.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE ATTACHED DRAWINGS

Fig. 1 is a block diagram for illustrating the functional structure of a wireless terminal used for an embodiment of the present invention;
Fig. 2 is a flow chart for illustrating the steps of the inventive method of comparing the motions of a person with the motions of a moving picture being displayed as a model in a wireless terminal as shown in Fig. 1;
Figs. 3A to 3M are to illustrate the steps of inventive method as shown in Fig. 2; and
Fig. 4 illustrates left orientation data values of the motions of a moving picture and a video signal.

### DETAILED DESCRIPTION OF EEXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness. Throughout the following description, and in connection with the drawings, same reference numerals are used to represent same functional parts for the sake of convenience. In addition, detailed descriptions of conventional parts not required to comprehend the technical concept of the present invention are omitted.

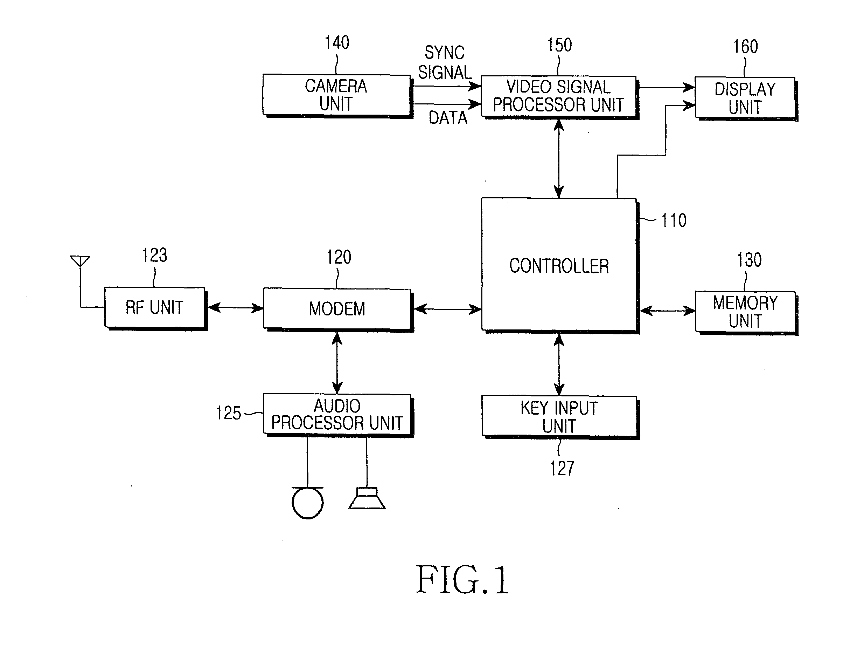

Referring to Fig. 1, an RF unit 123 for wireless communication comprises an RF transmitter for modulating and amplifying the frequency of a transmitted signal and an RF receiver for demodulating and low-noise amplifying a received signal. A modem 120 is provided to transform digital signals from a controller 110 into corresponding analog signals delivered to the RF unit 123, or the analog signals from the RF unit into corresponding digital signals delivered to an audio processor unit 125 or the controller 110. The audio processor unit 125 comprises a data codec for processing packet data and an audio codec for processing audio signals such as voice signals. The audio processor unit 125 converts digital audio signals from the modem 120 into corresponding analog signals delivered to a speaker, or analog audio signals from a microphone into corresponding digital signals delivered to the modem 120. The audio processor unit may be a separate unit or a built-in element of the controller 110.

A memory unit 130 comprises a program memory and a data memory. The program memory is to store programs for controlling the general operations of the wireless terminal. Memory unit 130 also stores programs for controlling the comparison of motions of the video input with those of a moving picture being displayed as model. Meanwhile, the data memory serves to temporarily store data generated during execution of the programs.

The controller 110 controls all functions of the wireless terminal and may be designed so as to include the modem 120 and the audio processor unit. In a motion compare mode, the controller 110 also controls the wireless terminal to compare the motion of video data, input through the camera unit 140, with the motion of a moving picture being displayed as a model. In addition, it controls the display to present the result of the comparison, namely a correspondence index value representing the degree of correspondence between the motion of the video data and the motion of the moving picture.

Also provided is a camera unit 140 which comprises a camera sensor for converting optical signals of a captured image into corresponding electrical signals, and a signal processor unit for converting analog electrical signals from the camera sensor into corresponding digital data. The camera sensor may be a CCD sensor and the signal processor unit a DSP (Digital Signal Processor unit). The camera sensor and the signal processor unit may be integrally combined or separately formed. The camera unit 140 serves to input video data, including motion, according to the present invention.

A video signal processor unit 150 processes video signals from the camera unit 140 by frames so as to generate frame video data fitting the characteristics and size of a display 160. The video signal processor unit 150 includes a video codec to compress frame video data or decompress the compressed frame video data according to a prescribed process. The video codec may be JPEG, MPEG4, Wavelet, and the like. The video signal processor unit 150 is provided with an OSD (On Screen Display) function to generate the OSD data according to the screen size under the control of the controller 110. The video signal processor unit 150 may receive video data including motion from the camera unit 140 while the moving picture is being displayed according to an exemplary embodiment of the present invention.

The display 160 displays video signals from the video signal processor unit 150 and data transferred from the controller 160. The display 160 may comprise an LCD unit, LCD controller, and memory for storing video data. The LCD unit may be formed with a touch screen so as to serve as an input unit. The display 160 may also display results obtained by comparing video data, including motion, with that of a moving picture when in the motion compare mode according to an exemplary embodiment of the present invention.

A key input unit 127 includes keys for inputting information and may include numbers and characters as well as keys for setting various functions. The key input unit 127 may also include a key for setting the motion compare mode according to an exemplary embodiment of the present invention.

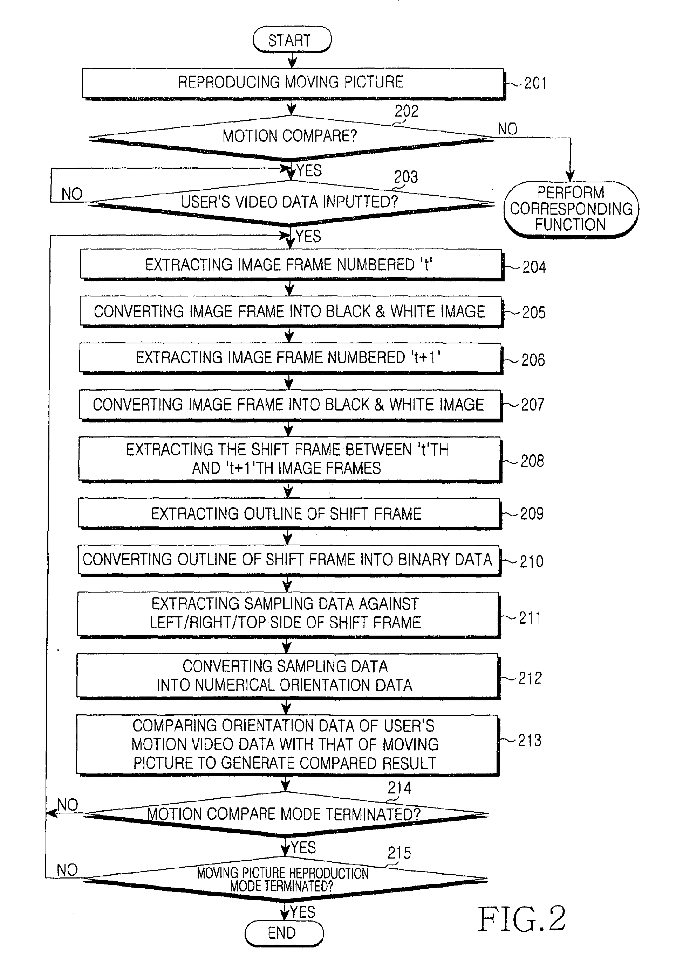

Hereinafter is described an exemplary embodiment of the inventive method and wireless terminal for comparing an input video with that of a moving picture being displayed as a model, with reference to Figs. 2 through 4.

Referring to Fig. 2, if a motion compare mode of the wireless terminal is selected while reproducing a moving picture in step 201, the controller 110 switches the terminal to the motion compare mode in step 202. Then, if video data is being input from the camera unit 140 in step 203, the controller 110 extracts at least two image frames of the video data. In this exemplary embodiment, it is assumed that the image frame numbered 't' (hereinafter referred to as 't'th image frame) and the image frame numbered 't+1' (hereinafter referred to as 't+1'th image frame) are extracted.

The controller 110 extracts the 't'th image frame from the image frame sequence input through the camera unit in step 204. The controller then converts the image frame into a black and white image and may also remove noise through a median filter in step 205. Next, the controller 110 extracts the 't+1'th image frame from the image frame sequence input through the camera unit in step 206. Then, the controller converts it into a black and white image and may also remove noise through a median filter in step 207.

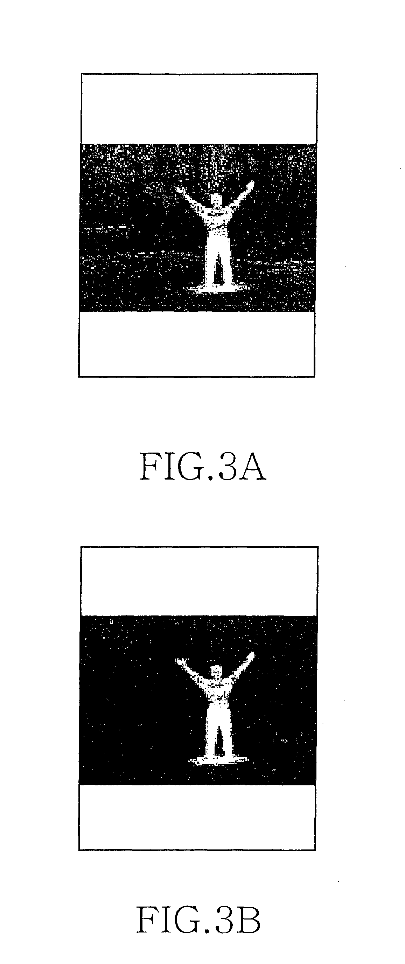

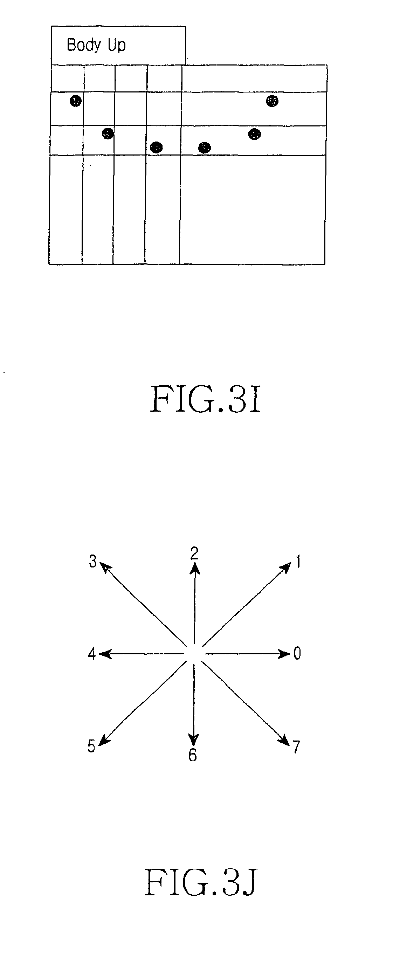

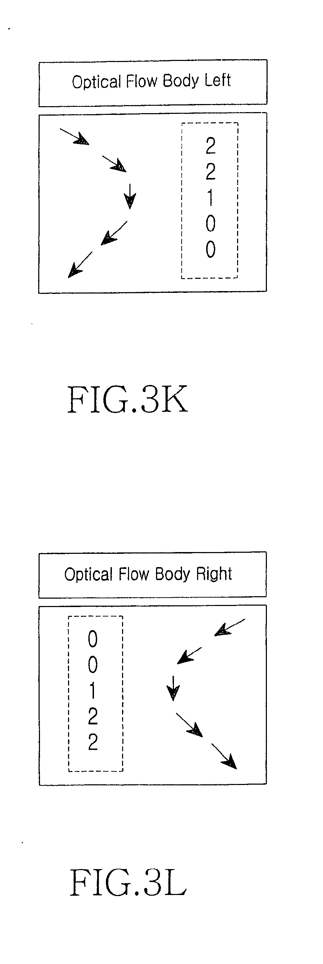

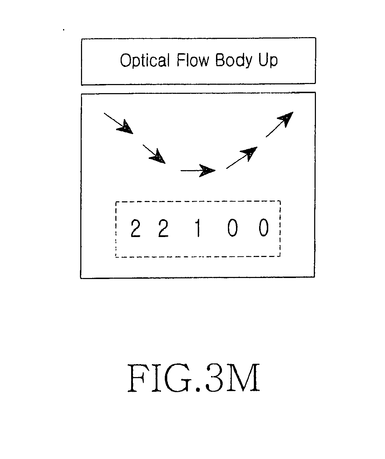

Thereafter, the controller 110 performs XOR operation with the 't'th and the 't+1'th image frames to extract a shift frame according to the shift between them in step 208. Fig. 3A shows the extracted shift frame between the 't'th and the 't+1'th image frame, and Fig. 3B shows the shift frame obtained by removing noise through filtering.

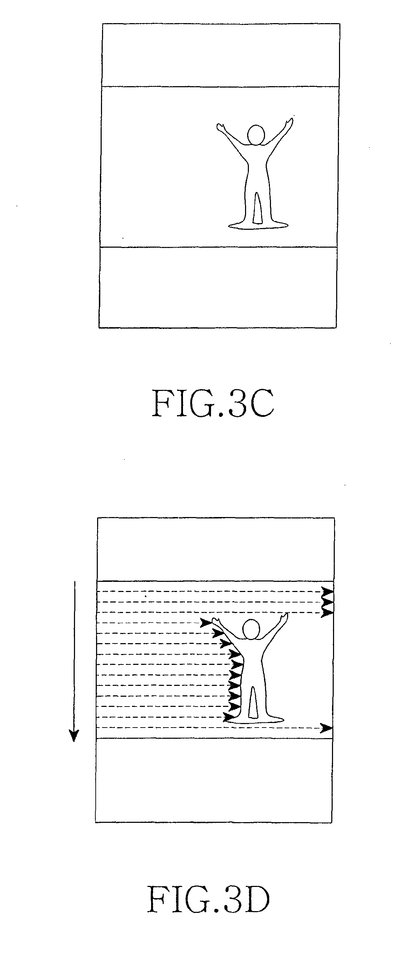

In step 209, the controller 110 applies a Sobel mask to the shift frame to extract an outline thereof. The outline is presented as black lines on a white background as shown in Fig. 3C. Then the controller 110 converts the outline of the shift frame to binary data in step 210. The controller 110 proceeds to step 211 to extract sampling data from the shift frame converted into binary data with reference to predetermined directions. In this exemplary embodiment, the sampling data have been obtained in the left, right, and upper directions.

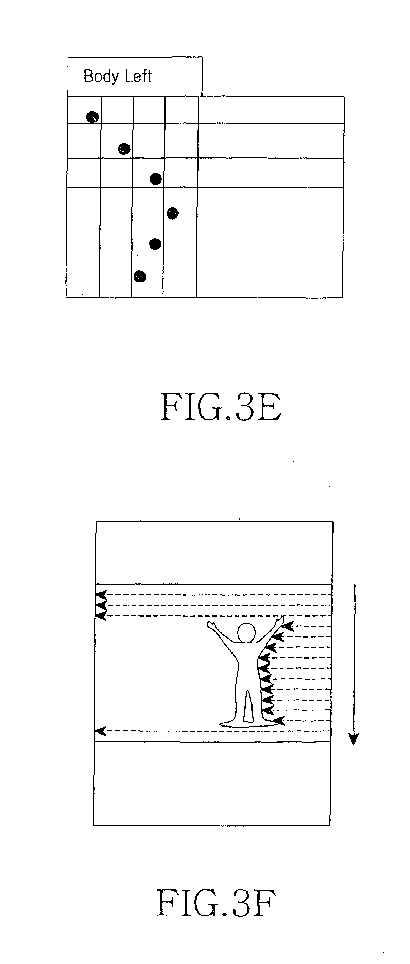

For the left direction, as shown in Fig. 3D, the controller 110 produces left sampling data by collecting position values of black pixels extracted by scanning the shift frame from the left side thereof successively from the upper end of the shift frame to the lower end (or from the lower end to the upper end). The position values of the black pixels are stored to produce the left sampling data as shown in Fig. 3E. In this case, Fig. 3D illustrates the shift frame after conversion of the outline of the shift frame to binary data.

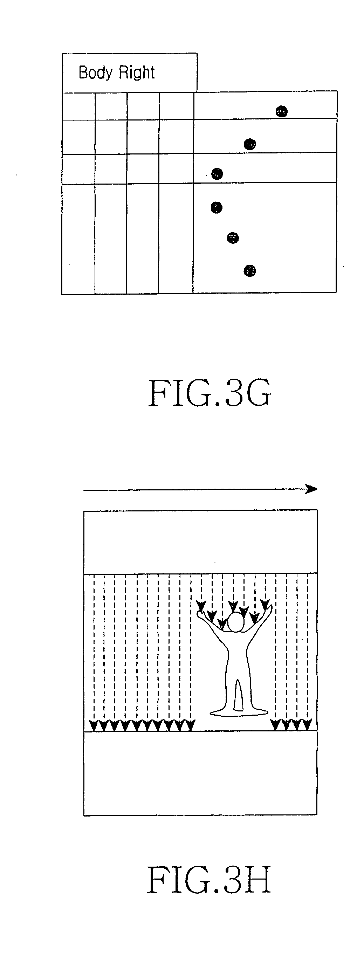

For the right direction, referring to Fig. 3F, the controller 110 produces right sampling data by collecting position values of black pixels extracted by scanning the shift frame from the right side thereof successively from the upper end of the shift frame to the lower end (or from the lower end to the upper end). The position values of the black pixels are stored to produce the right sampling data as shown in Fig. 3G. In this case, Fig. 3F illustrates the shift frame after conversion of the outline of the shift frame to binary data.

For the upper direction, referring to Fig. 3H, the controller 110 produces top sampling data by collecting position values of black pixels extracted by scanning the shift frame from the top side thereof successively from the left to the right end (or from the right end to the left end). The position values of the black pixels are stored to produce the top sampling data as shown in Fig. 3I. In this case, Fig. 3F illustrates the shift frame after conversion of the outline of the shift frame to binary data.

Subsequently, the controller 110 converts the left/right/top sampling data into corresponding numerical orientation data in step 212. In step 212 the controller 110 converts the left sampling data of Fig. 3E into numerical orientation data as shown in Fig. 3K, based on numerical orientation data as shown in Fig. 3J. Likewise, the controller 110 converts the right sampling data of Fig. 3G into numerical orientation data as shown in Fig. 3Land converts the top sampling data of Fig. 31 into numerical orientation data as shown in Fig. 3M.

In step 213, the controller 110 compares the numerical orientation data of the video data with that of the moving picture being displayed as a model and generates a comparison result. The controller 110 compares the left orientation data of the left side of the video data with the left orientation data of the moving picture, the right orientation data of the right side of the video data with the right orientation data of the moving picture, and the top orientation data of the top side of the video data with the top orientation data of the moving picture.

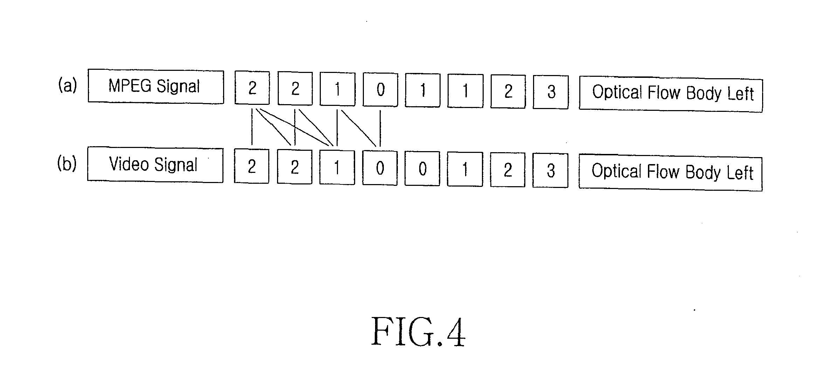

The numerical orientation data of the motion of the moving picture may be stored prior to comparing it with that of the video data motion. Of course, the numerical orientation data of the motion of the moving picture may be extracted through the steps of 204 to 212. In Fig. 4, line (a) illustrates the left orientation value of the motion of the moving picture and line (b) illustrates the left orientation value of the video data.

Thus, the controller 110 compares the numerical orientation data of the video data, input through the camera unit 140, with that of the moving picture being displayed as a model and may present a correspondence index value representing a result of the comparison.

When the process of comparing the video data with the moving picture is completed through repeating the steps 204 to 213, the controller 110 terminates the motion compare mode in step 214. Alternatively, if reproduction of the moving picture is terminated while repeating the steps 204 to 213, the controller 110 terminates both the motion compare mode and the moving picture reproduction mode in step 215.

While the present invention has been shown and described in connection with the exemplary embodiments accompanied by the attached drawings, it will be readily apparent and understood by those skilled in the art that various changes and modifications in form and details may be made therein without departing from the spirit and scope of the invention as defined by the appended claims.

## Claims

1. A method of comparing the motions of video data with the motions of a moving picture being displayed as a model, comprising the steps of:
switching to motion compare mode by selection during displaying said moving picture;
extracting at least two image frames from video data inputted in the motion compare mode;
extracting the shift frame between said image frames;
extracting sampling data from the shift frame with reference to predetermined directions;
converting said sampling data into video orientation data; and
comparing said orientation data with the orientation data of said moving picture to a generate the compared result displayed.

2. The method of Claim 1, wherein the step of extracting at least two image frames further comprises the steps of:
extracting an image frame numbered 't' (hereinafter referred to as 't'th image frame) ;
converting the 't'th image frame into a black and white image;
extracting an image frame numbered 't+1' (hereinafter referred to as 't+1'th image frame); and
converting the 't+1'th image frame into a black and white image.

3. The method of Claim 1, wherein the step of extracting a shift frame from said image frames comprises an XOR operation.

4. The method of Claim 1, further including the steps of:
extracting an outline of the shift frame; and
converting the outline into binary data.

5. The method of Claim 4, wherein the step of extracting an outline comprises using a Sobel mask.

6. The method of Claim 1, wherein the step of extracting sampling data further comprises the steps of:
producing left sampling data by collecting position values of black pixels extracted by scanning the shift frame from the left side thereof;
producing right sampling data by collecting position values of black pixels extracted by scanning the shift frame from the right side thereof; and
producing top sampling data by collecting position values of black pixels extracted by scanning the shift frame from the top side thereof.

7. The method of Claim 6, wherein the shift frame comprises binary data obtained by converting an extracted outline.

8. A method as defined in Claim 1, wherein the step of converting said sampling data into orientation data comprises the further steps of:
converting the left sampling data obtained against the left side of the shift frame into numerical orientation data;
converting the right sampling data obtained against the right side of the shift frame into numerical orientation data; and
converting the top sampling data obtained against the top side of the shift frame into numerical orientation data.

9. The method of Claim 8, wherein the step of comparing said video orientation data with orientation data of a moving picture further comprises the steps of:
comparing the left orientation data to left orientation data of a corresponding image frame of said moving picture to obtain a left correspondence index value;
comparing the right orientation data to right orientation data of the corresponding image frame of said moving picture to obtain a right correspondence index value;
comparing the top orientation data to top orientation data of the corresponding image frame of said moving picture to obtain a top correspondence index value; and
displaying a comparison result based on the left, right and top correspondence index values.

10. The method of Claim 9, further comprising storing the orientation data values of the corresponding image frame of said moving picture previous to the step of comparing said video orientation data.

11. The method of Claim 9, wherein the orientation data values of the corresponding image frame of said moving picture are based on the same motion as the input video data.

12. The method of Claim 9, wherein the corresponding image frame of said moving picture corresponds with the shift frame.

13. A wireless terminal comprising:
a video input unit; and
a controller;
wherein the video input unit inputs video data to the controller and further wherein the controller extracts at least two image frames from the video data, extracts a shift frame from the image frames, extracts sampling data from the shift frame, converts the sampling data into video orientation data, compares the video orientation data with orientation data of a moving picture and generates a comparison result based on the comparison of the video and moving picture orientation data.

14. The wireless terminal of Claim 13, further comprising a display for displaying at least one of the moving picture and the comparison result.

15. The wireless tenninal of Claim 13, further comprising a memory unit storing the programs for controlling to compare the motions of video data with those of a moving picture.
